# EUROPEAN PATENT SPECIFICATION

(11) **EP 2 683 627 B1**
(45) Date of publication and mention of the grant of the patent: **18.05.2016**
(21) Application number: 11707859.2
(22) Date of filing: 11.03.2011
(51) Int. Cl.: B60P 3/41, B60P 3/42, B65D 88/12, B65D 88/16

(54) **TRANSPORT CONTAINER AND METHOD FOR TRANSPORTING BULK GOODS**
TRANSPORTBEHÄLTER UND VERFAHREN ZUR FÖRDERUNG VON SCHÜTTGUT
CONTENANT DE TRANSPORT ET PROCÉDÉ DE TRANSPORT DE MARCHANDISES EN VRAC

(43) Date of publication of application: 15.01.2014
(73) Proprietor: Fritz Egger GmbH & Co. OG, 6380 St. Johann in Tirol (AT)
(72) Inventor: PATERSON, John, Brampton, Cumbria CA8 2AT (GB)
(74) Representative: Cohausz & Florack
(86) International application number: PCT/EP2011/053683
(87) International publication number: WO 2012/123008

(56) References cited:
- WO-A1-2008/140172
- DE-A1- 3 928 054
- DE-A1-102008 052 238
- US-B1- 7 073 676

## Description

The invention relates to a transport container and to a method for transporting bulk goods, especially woodchips and/or sawdust.

Bag-shaped containers for storing or transporting bulk goods, especially granular matter, are known in the art as so-called "big bags" or "flexible intermediate bulk containers". These big bags are made of thick woven polyethylene or polypropylene and have standardized sizes with a capacity of around 1000 kg. The largest big bags available have a base area which is adapted to the EURO pallet or CEN pallet, i.e. of 1200 mm × 800 mm.

Large amounts of bulk goods, especially woodchips and sawdust, accrue in the wood processing industry, for example when machining log wood. These bulk goods often cannot be used directly or at the same place so that they have to be stored or transported.

Log wood is usually transported by means of special container frames comprising a horizontal base frame and a plurality of stanchions along the long sides of the base frame. The log wood can be stacked on the horizontal base frame and is prevented from rolling off from the container frame by the stanchions. Such a container frame is for example known from DE 43 42 536 C1. However, these container frames as such are not suitable for transporting bulk goods. DE 102008052 238A1 discloses another container froms. Big bags are unsuitable for being transported on a container frame for transporting log wood since the bulk material would be blown away by the air flow during transport. Moreover, big bags cannot be densely packed on such a container frame leaving a lot of space unused.

In order to reduce the amount of unloaden journeys of the container frames for log wood, DE 10 2005 042 243 A1 suggests a special modification of these container frames which allow to mount an outside cladding between the stanchions to provide a cargo bay for accommodating bulk goods.

However, these container frames need technical modifications and additional equipment which has to be mounted to the container frame in an extra working step. Furthermore, unloading is quite cumbersome and requires the use of shovels or suction tubes as these container frames are usually not tiltable.

An object of the present invention a transport container and a method for transporting bulk goods with which the loading, transport and/or unloading of bulk goods is simplified and rendered more economic. The object is solved according to claims 1 and 14. To achieve the above object there is provided a transport container with a bag-shaped container for bulk goods, especially woodchips and/or sawdust, with a lower part forming the bottom and with at least one side part connected to the lower part forming the side wall, wherein the lower part and the side part are designed to keep inside bulk goods, wherein the side wall forms two opposing faces, wherein connection means are provided for releaseably connecting each of the two opposing faces of the side wall with at least two stanchions of a container frame for transporting log wood, wherein the distance between the connection means matches with or is adjustable to match with the distance between the stanchions.

In this way bulk goods can be transported or stored on container frames for transporting log wood in a very secure and efficient manner and without having to modify the container frame. With the connection means the bag-shaped container can be easily connected with the two long sides of the container frame and additional fastening means can be dispensed with. Moreover the bag-shaped container is securely connected with both sides of the container frame so that an undesirable shifting or tilting of the bag-shaped container is prevented.

The transport container with the bag-shaped container is especially suitable for woodchips and/or sawdust since these kinds of bulk goods are prone to fall out from usual containers, for example big bags, due to their small size and their light weight.

The connection means could be releasably mountable on the bag-shaped container to utilize the use of lorries with different stanchion distances. The bag-shaped container can comprise, especially at the outside, fixation means at different positions along the side wall of the bag-shaped container for individually mounting the connection means. Instead, for the same purpose a fixation means can be provided, which surrounds the whole or a part of the bag-shaped container. The named fixation means can be provided i.e. in form of a profile.

If in an embodiment the connection means are designed and positioned in such a way that they can be connected to at least two opposing stanchions of a container frame for transporting log wood, the stability of the stanchions can be used to further ease and stabilize the connection of the bag-shaped container with the container frame. For this purpose the connection means are preferably positioned spaced apart from the bottom of the bag-shaped container, for example close to the top of the side part.

Container frames for transporting log wood generally have standardized dimensions, especially a standardized base frame size and/or a standardized number and a typical distance of the stanchions. Therefore the bag-shaped container can be adapted for a special container frame type for transporting log wood, but also for a general standardized container frame type.

The two opposing faces are understood to mean especially two distinct sections of the side wall which do not lie in a common plane. The opposing faces can be flat or curved, for example. They can laterally abut against each other or be separated from each other by another part of the side part.

The lower part and the side part of the bag-shaped container can be designed as one-part, two-part or multi-part. Especially the side part can be designed to be composed of several parts.

Bulk goods are understood to mean granular matter like woodchips, sawdust, wood pellets and the like, especially with particle sizes of between 1 µm and 10 cm, preferably of between 1 mm and 5 cm.. Depending on the application the lower part and the side part of the bag-shaped container are designed to keep inside the respective bulk goods, i.e. they have a mesh size which is smaller than the specific average particle size of the granular matter to be transported.

According to a preferred embodiment of the bag-shaped container the two opposing faces of the side wall have a maximum distance in the completely filled state of the bag-shaped container of at least 1600 mm, preferably between 1600 mm and 3000 mm, more preferably between 2000 mm and 2600 mm. This dimension is referred to as the width of the bag-shaped container. For example the maximum distance is between 2250 mm and 2350 mm. In this way, the cargo area of a typical container frame for log wood can be exploited to a large extent.

Herein the term "maximum distance in the completely filled state" is understood to mean the maximum extension of the bag-shaped container between the respective two opposing faces, especially in the region of the connection means, when the bag-shaped container is regularly filled with bulk goods without exerting additional pressure to the bulk goods inside the bag-shaped container; the bulk goods are filled into the bag-shaped container e.g. by simply letting the particles flow (trickle) into the container or by throwing the particles into the container. It is clear from the above that the maximum distance between opposing faces may be larger in case that the bag-shaped container is overfilled, which is the case when bulk goods are filled into the bag-shaped container by applying additional pressure to the material during the filling operation and/or in the bag-shaped container. In the latter case the maximum distance between opposing faces may be larger due to a certain elasticity and flexibility of the container material.

The length of the bag-shaped container, which is understood to mean the largest extension of the container in the completely filled state in a direction perpendicular to the width direction, is preferably at least 1500 mm, preferably between 2000 mm and 10000 mm, more preferably between 4000 mm and 8000 mm and even more preferably between 6000 mm and 6200 mm.

The height of the bag-shaped container, which is understood to mean the maximum extension of the bag-shaped container in the completely filled state in a direction perpendicular to the length and to the width direction, is preferably between 1500 mm and 3700 mm, more preferably between 2500 mm and 2700 mm. In this way the bag-shaped container is optimally matched to the typical size of container frames for log wood so that it can be securely stored on these container frames and exploit most of their cargo area.

According to a further embodiment of the bag-shaped container a plurality of connection means is provided for each of the two opposing faces of the side wall, wherein the connection means for each side wall are preferably spaced apart from each other by a distance in the range of 2000 mm to 4000 mm, preferably 2500 mm to 3500 mm, more preferably 2900 to 3100 and even more preferably 2980 mm to 3080 mm. In this way the connection means are optimally matched to the typical distance of stanchions of container frames for transporting log wood.

According to a further embodiment of the invention the connection means are designed for a positive fit connection with one or more stanchions of a container frame for transporting log wood. In this way the bag-shaped container can be connected to a container frame for transporting log wood in a particularly easy and secure manner. For example the connection means can be designed as sleeves, whereby the interior dimensions of the sleeves preferably correspond to the typical outer dimensions of the stanchions. The sleeves are preferably positioned at the top of the side part and do not extend over the full height of the side part. Preferably, their height is less than one half of the side part height. The sleeves can consist of or be reinforced by plastic and/or metal such as aluminum. The sleeves may be capped at the top to rest on the top of the stanchions. Alternatively, the connection means can also be designed as loops or bracket.

According to the invention the bag-shaped container is provided with an upper part which is connected to the side part and forms the top of the bag-shaped container, wherein the upper part comprises a closeable opening for charging and discharging. By means of the top part, the bag-shaped container can for example form a basically completely closed hollow space in which bulk goods can be stored without risk of leaking. By means of a closeable opening, charging and discharging the bag-shaped container can be simplified while at the same time the bulk goods can be prevented from leaking and other substances can be prevented from ingression. In addition, an opening, especially a closeable opening, can also be provided at the side part and/or the lower part. The upper part is positioned opposite to the bottom of the bag-shaped container.

According to a further embodiment of the present invention the side part and/or the upper part at least partially have a tapered shape, especially a funnel shape, in the region of the opening, wherein the opening is positioned (essentially) in the center of the tapered shape. In this way the bag-shaped container can be easily discharged since the bulk goods are directed towards the opening by the tapered shape. Especially, it is possible to completely discharge the bag-shaped container even with a small opening, which improves control over the discharge flow rate. Preferably, the side part and/or the upper part at least partially have a cone shape.

According to a further embodiment of the present invention the lower part, the side part and/or the upper part are at least partially made from a flexible material, especially foil, or textile material like canvas, woven fabric, meshwork, or a combination thereof. Flexible materials have the advantage, that they can be fold together when the bag-shaped container is empty or not completely filled, so that the bag-shaped container can then be reduced to a fraction of its original volume. Woven fabric and meshwork, especially of plastics like polyethylene, polypropylene or polyvinylchloride, are highly resistant against external and internal forces with a high flexibility as the same time. To hold back substances washed out by rain in the bag-shaped container, the bag-shaped container is preferably cladded with an inner layer of foil. For example, the lower part, the side part and/or the upper part can at least partially be made from double thickness polyvinylchloride with a specific weight of at least 900 mg/m².

Moreover, it is also possible to slightly overfill the bag-shaped container due to the flexible material. Preferably at least the side part is made from a flexible material, so that the two opposing faces of the side wall can have a larger distance between the stanchions than in the region with direct abutment with the stanchions of a container frame in the overfilled state of the bag-shaped container. In this way the bag-shaped container can store even more material and is held particularly securely on the container frame. However, also the lower and/or the upper part of the bag-shaped container can be made from flexible material.

Preferably, the lower part, the side part and/or the upper part of the bag-shaped container are impermeable to liquids, especially waterproof, to guarantee a sufficient rain protection. Furthermore, the lower part, the side part and/or the upper part of the bag-shaped container can be permeable or impermeable for air. If they are permeable for air, the aerodynamic resistance of the bag-shaped container can be reduced. For example, the upper part can be a net. If the lower part, the side part and/or the upper part are impermeable for air, the bulk good is prevented from being swirled.

According to a further embodiment of the bag-shaped container the lower part, the side part and/or the upper part comprise reinforcement means, especially strut members, which reinforcement means are preferably arranged in the region of the connection means. In this way the structure of the bag-shaped container can be stabilized. The reinforcement means can be made of plastic, metal alloys or even wood, for example. In particular, the reinforcement means can be integrated into the side part, the lower part and/or the upper part, for example by sewing them with these parts.

According to a further embodiment of the bag-shaped container means for lifting the bag-shaped container are provided, preferably lifting loops. In this way the bag-shaped container can be easily lifted onto or off the container frame, for example by a crane such as a log handling crane, without additional slinging equipment being necessary. In order to strengthen the structure of the bag-shaped container during lifting the lifting means are preferably positioned in the region of the reinforcement means and/or of the connection means. Preferably, lifting means can be provided close to the bottom and/or close to the top of the bag-shaped container. The lifting means, especially the lifting means close to the bottom, can also be used for a further connection with the container frame, especially with the stanchions.

Furthermore, to achieve the above object there is provided a transport container, with a container frame for transporting log wood, wherein the container frame comprises a horizontal base frame having two long sides and two short sides, wherein the container frame comprises a plurality of stanchions running angularly to the horizontal base frame, wherein the stanchions are spaced apart from each other and are arranged along the long sides of the horizontal base frame, wherein at least two of the stanchions are arranged at each one of the long sides, wherein the transport container further comprises a separate bag-shaped container as defined above, wherein the connection means of the bag-shaped container are connectable on each long side with at least two of the stanchions.

In this way the bag-shaped container can be loaded onto the container frame very easily and without additional equipment. Furthermore, the cargo area of the container frame can be exploited to a high extent.

For example, the volume of the bag-shaped container fills at least 70%, preferably at least 80%, more preferably at least 90% or even more preferably about 100% of the container frame cargo volume. Preferably, the bag-shaped container can even fill more than 100% of the container frame cargo volume in that the distance of the two faces of the side part is larger in the region between the stanchions than in the region of direct abutment with the stanchions.

The container frame cargo volume is understood to mean the volume of the space which is surrounded by the horizontal frame base area and the stanchions. For rectangular stanchions, for example, the frame cargo volume is the horizontal frame base area between the stanchions multiplied by the height of the stanchions. The above named proportions of the container frame cargo volume can also be filled by a plurality of bag-shaped containers according to the invention.

Preferably, at least 80%, more preferably at least 90% and even more preferably about 100% of the horizontal frame base area between the stanchions is covered by or positioned under the bag-shaped container or a plurality of bag-shaped containers.

The stanchions of the container frame can be fixed or tiltable, for example. They can be positioned directly opposite to each other or with an offset.

Preferably, the lower part or the side part of the bag-shaped container at least partially bears on the base frame. For the lower part bearing on the base frame, the opening for charging and discharging is directed upwards, so that bulk goods are prevented from unintentional discharging even without closing the opening. For the side part bearing on the base frame, the dimensions of the bag-shaped container can be chosen differently.

According to a preferred embodiment of the transport container, when the bag-shaped container is connected with the container frame, in a section between two opposing stanchions the maximum distance of the two opposing faces in the completely filled state of the bag-shaped container corresponds to the inside width of the container frame and is optionally at least 1600 mm, and lies preferably between 1600 mm and 3000 mm, more preferably between 2000 mm and 2600 mm

The inside width of the container frame is understood to mean the maximum distance of opposing stanchions in the direction of the short sides. In this way the bag-shaped container fills the full width of the container frame and exploits most of the cargo area. Moreover, it can be connected securely to the container frame.

A slight bulging of the bag-shaped container in the section between adjacent stanchions may occur for example when the container is regularly filled or overfilled. Accordingly, when the bag-shaped container is connected with the container frame, in a section adjacent to two opposing stanchions the side wall in the completely filled state of the bag-shaped container projects beyond the inner face of the adjacent one of the two opposing stanchions. Namely, the side wall projects the inner face of the adjacent stanchion over at most 500 mm, preferably at most 350 mm, more preferably at most 200 mm.

To reduce or prevent bulging of the bag-shaped container the transport container can comprise anti bulging means, in particular partition walls and/or belts extending between the two opposing faces of the side wall, preferably extending parallel to the two short sides.

According to another embodiment of the transport container the length of the bag-shaped container corresponds to the length of the horizontal base frame or to 1/n times the length of the horizontal base frame, wherein n is an integer. For n=2, for example, the length of the bag-shaped container corresponds to half of the length of the horizontal base frame. With the length of the bag-shaped container corresponding to the length of the horizontal base frame the cargo area can be exploited to a high extent. If the length of the bag-shaped container corresponds to 1/n times the length of the horizontal base frame, n of the bag-shaped containers can be transported with one container frame at the same time.

According to a further embodiment of the present invention the transport container is part of a vehicle, especially of a lorry, of a trailer or of a rail wagon. Especially rail wagons comprising stanchions can be used to transport bulk goods by means of the bag-shaped container according to the invention.

Furthermore, the object is solved according to the present invention by a method for transporting bulk goods, especially woodchips and/or sawdust, in which bulk goods are charged into a bag-shaped container as defined above, in which the bag shaped container is, before or after being filled with the bulk goods, loaded onto a container frame for transporting log wood, especially a container frame of a transport container as defined above, in which the bag-shaped container is connected with the two long sides of the container frame by means of the connection means of the bag-shaped container such that the connection means of the bag-shaped container are connected on each long side with at least two of the stanchions, in which the bag-shaped container is stored or transported on the container frame, in which the bag-shaped container is unloaded from the container frame and in which the bag-shaped container is discharged.

The bag-shaped container and the container frame according to this method together represent an embodiment of the transport container according to the invention. Concerning the advantages of this method it is referred to the description of the bag-shaped container and the transport container according to the invention.

For example, after discharging the empty bag-shaped containers can be stored or transported on usual lorries, preferably in a compacted manner.

According to a preferred embodiment of the method after unloading and before discharging the bag-shaped container is mounted on a silo frame in a way that the opening faces essentially downwards, wherein the opening is preferably spaced apart from the ground.

It was found that by this method it is possible to use the bag-shaped container as part of a modular silo, which simplifies the discharging and the storage of the bulk goods within the container.

Preferably the bag-shaped container is mounted on the silo frame by means of the connection means, the lifting means and/or additionally provided means for mounting. The silo frame can for example comprise at least two vertical portions and a horizontal portion connecting the two vertical portions. The silo frame can be a steel frame, for example.

The features and advantages of the present invention presented above as well as other features will now be described in greater detail with reference to the attached drawings, wherein:
- Fig. 1a): shows a container frame for transporting log wood according to a first embodiment,
- Fig. 1b): shows a container frame for transporting log wood according to a second embodiment,
- Fig. 2a)-c): show a first exemplary embodiment of the bag-shaped container not according to the invention, in side view (Fig. 2a), in plane view (Fig. 2b) and in an end view (Fig. 2c),
- Fig. 3: shows a further exemplary embodiment of the bag-shaped container not according to the invention, in side view,
- Fig. 4: shows an exemplary embodiment of the transport container not according to the invention, comprising a further exemplary embodiment of the bag-shaped container according to the invention,
- Fig. 5: shows a further exemplary embodiment of the transport container according to the invention comprising a further exemplary embodiment of a bag-shaped container according to the invention and
- Fig. 6a)-c): show an exemplary embodiment of the method according to the invention.

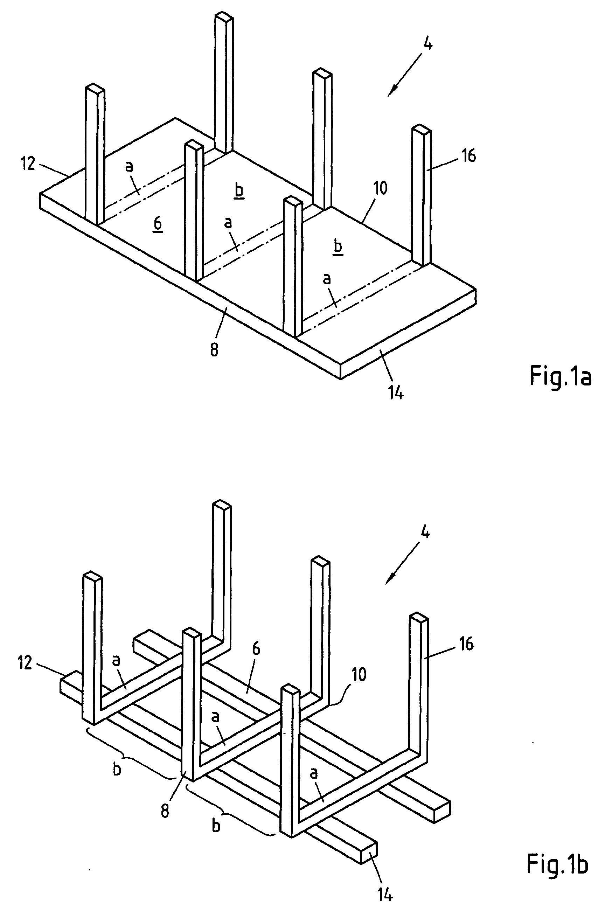

Fig. 1a) shows a typical container frame 4 for transporting log wood. The container frame 4 comprises a horizontal base frame 6 in form of a plate, the base frame 6 having two long sides 8, 10 and two short sides 12, 14. The container frame 4 furthermore comprises a plurality of stanchions 16 running angularly to the horizontal base frame 6, for example in right angles. The stanchions 16 are spaced apart from each other and are arranged at the long sides 8, 10 of the base frame 6.

An alternative embodiment is shown in Fig. 1b). According to this alternative the container frame 4 comprises a horizontal base frame 6 in form of a tube frame having two long sides 8, 10 and two short sides 12, 14. Also in this case the container frame 4 comprises a plurality of stanchions 16 running angularly to the horizontal base frame 6, for example in right angles. The stanchions 16 are spaced apart from each other and are arranged at the long sides 8, 10 of the base frame 6.

The container frame 4 of both alternatives can for example be part of a vehicle, especially of a lorry, a trailer or a rail wagon. Log wood can be stacked on the horizontal base frame 6 with their longitudinal extension being essentially parallel to the long sides 8, 10. The stanchions 16 then prevent the log wood from falling off the container frame 4.

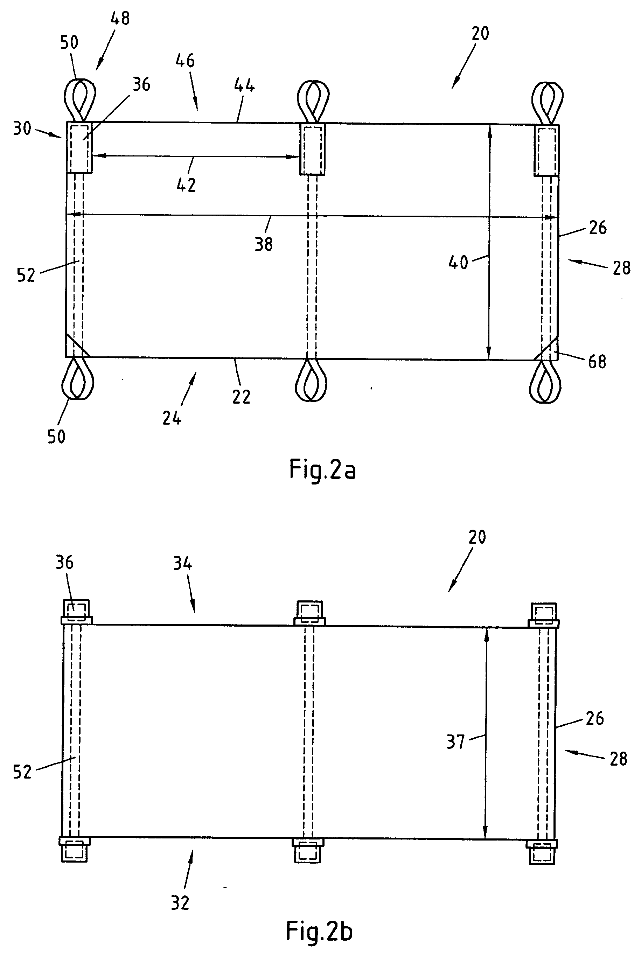

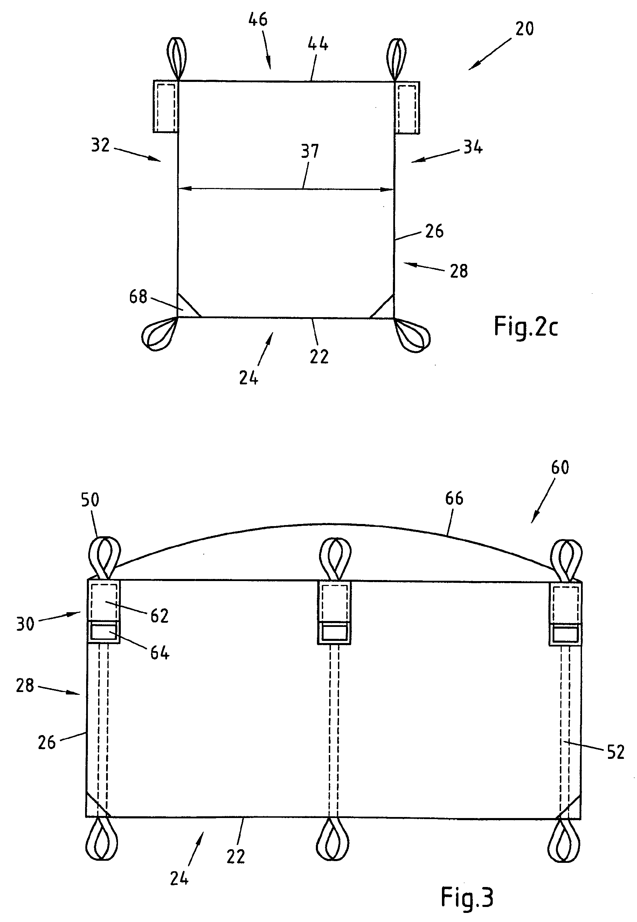

Figs. 2a), 2b) and 2c) show an exemplary embodiment of the bag-shaped container which is not according to the invention. The bag-shaped container 20 comprises a lower part 22 forming the bottom 24 and a side part 26 connected to the lower part 22 forming the side wall 28. In the present exemplary embodiment the lower part 22 has a rectangular shape and the side part 26 has four basically flat portions and completely surrounds the lower part 22. However, it goes without saying that different shapes of the lower part 22 and an according design of the side part 26 are also conceivable. The lower part 22 and the side part 26 define a cargo volume of the bag-shaped container 20 which can be charged with bulk goods. For this purpose the lower part 22 and the side part 26 are so designed to keep inside the bulk goods. For example, the lower part 22 and the side part 26 are made from a material which is impermeable for granular matter and rain.

The bag-shaped container 20 furthermore comprises connection means 30 for releasably connecting two opposing faces 32, 34 of the side wall 28 with the two long sides of a container frame for transporting log wood. In the present example, the connection means 30 are designed to be connectable with opposing stanchions of a container frame for transporting log wood. For example the connection means 30 can be designed as sleeves 36 which are attached to the two opposing faces 32, 34 and which can be imposed on the stanchions of a container frame. In this way the bag-shaped container 20 can be connected to the container frame on both sides, i.e. by the two opposing faces 32, 34, so that the bag-shaped container 20 can be securely fixed on the container frame.

The bag-shaped container 20 preferably exploits about the full width of the cargo area of a container frame. For this purpose, the bag-shaped container 20 has a width 37 of at least 1600 mm, preferably between 1600 mm and 3000 mm, more preferably between 2000 mm and 2600 mm or even more preferably between 2250 mm and 2350 mm. The width thereby is understood as the maximum distance of the two opposing faces 32, 34, preferably in the region of the connection means 30, in the completely filled state of the bag shaped container 20. It is to be mentioned that, even though the side walls of the bag-shaped container may curve out when the bag-shaped container is full of bulk goods and therefore their distance will partly exceed the distance of the stanchions, the aforementioned values and ranges however apply for both the sections a (shown in Fig. 1a) and b)) between two opposing stanchions 16 and the sections b (shown in Fig. 1a) and b)) adjacent to the respective two opposing stanchions 16. The bag-shaped container 20 optionally has a length 38 of at least 1500 mm, preferably between 2000 mm and 10000 mm, more preferably between 4000 mm and 8000 mm or even more preferably between 6000 mm and 6200 mm, which corresponds to the typical length of a container frame for transporting log wood. The height 40 of the bag-shaped container 20 is preferably between 1500 mm and 3700 mm, more preferably between 2500 mm and 2700 mm. In this way it is possible to exploit a large amount of the cargo area of the container frame and the volume of the bag-shaped container 20 preferably fills at least 80%, more preferably 90%, in particular even about 100% of the container frame cargo volume.

The distance 42 between the connection means 30 is preferably in the range of 2000 mm to 4000 mm, more preferably 2500 mm to 3500 mm or even more preferably 2900 mm to 3100 mm, which corresponds to the typical spacing of stanchions of container frames for transporting log wood. For example the distance 42 may be between 2980 mm and 3080 mm.

The bag-shaped container 20 further optionally comprises an upper part 44 which is connected to the side part 26 and forms the top 46 of the bag-shaped container. Preferably the upper part 44 comprises a closable opening for charging and discharging (not shown).

Furthermore the bag-shaped container 20 comprises means 48 for lifting the bag-shaped container by, for example, a crane. In the example the lifting means 48 are designed as lifting loops 50 made from a plastic woven fabric. Optionally the lifting means 48 can be made from strips 52 of woven fabric which are sewn with the side part 26. Especially, two lifting loops 50 can be connected by such a strip 52 and/or be designed as one-part as shown in the Figs 2a) and 2b).

The lower part 22, the side part 26 and/or the upper part 44 can be made from a flexible material, especially foil, canvas, woven fabric, meshwork or a combination thereof.

The bag-shaped container 20 may further comprise reinforcement means such as strut members and/or corner protections 68. The strips 52 can also serve as reinforcement means.

In the following, corresponding elements are marked with the same reference numerals.

Fig. 3 shows a second exemplary embodiment of the bag-shaped container which is not according to the invention. The bag-shaped container 60 has connection means 30 which are designed as cap-like sleeves 62 which have an opening 64 on one side to accommodate a stanchion of a container frame for transporting log wood in each case. The inner cross section of the opening 64 is preferably adapted to the outer cross section of the stanchion to be connected with. The other side of the sleeve 62 is capped so that the sleeve 62 can rest upon a stanchion of a container frame.

The upper part 66 of the bag-shaped container is bulged so that the cargo volume of the bag-shaped container 60 is increased. Preferably the upper part 66 is impermeable for water to provide a sufficient rain protection. Alternatively an additional covering can be provided as rain protection.

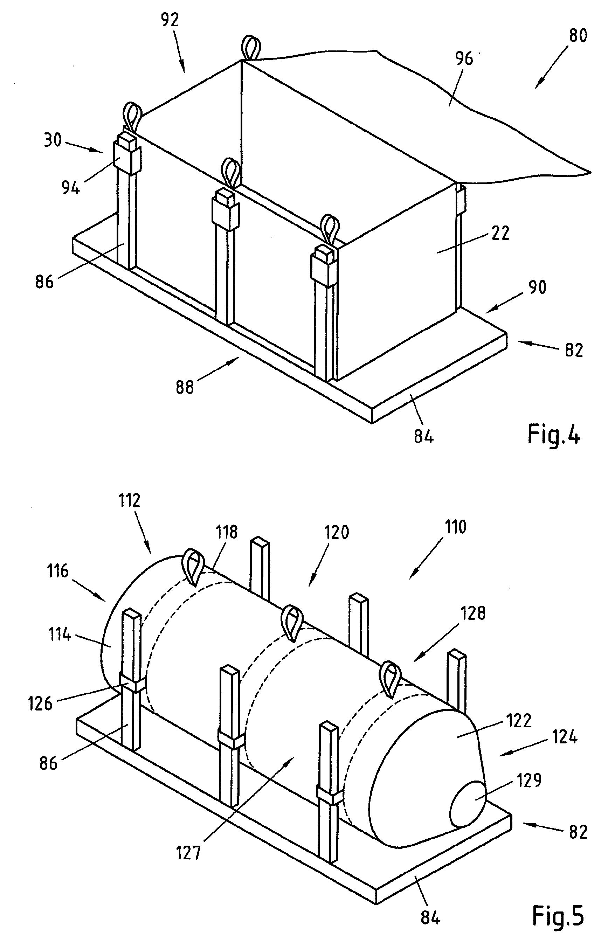

Fig. 4 shows an exemplary embodiment of the transport container which is not according to the invention, comprising a further embodiment of the bag-shaped container according to the invention. The transport container 80 has a container frame 82 for transporting log wood, which comprises a horizontal base frame 84 and a plurality of stanchions 86 running angularly to the horizontal base frame 84 and being arranged at the long sides 88, 90 of the base frame 84.

The transport container 80 further comprises the bag-shaped container 92, which is an exemplary embodiment of the bag-shaped container according to the invention. The connection means 30 of the bag-shaped container 92 are designed as loops or brackets 94, the interior diameter of which corresponds to the outer dimensions of the stanchions 86. The bag-shaped container 92 is connected to the container frame 82 by the brackets 92 being imposed on the stanchions 86 and thereby forming a positive fit connection in each case. The volume of the bag-shaped container 92 preferably fills more than 90% of the container frame cargo volume. The upper part 96 of the bag-shaped container 92 is for example designed as a flexible covering foil which is connected to the side part 26 on one side and can be completely withdrawn from the bag-shaped container. On the other hand, the upper part 96 can completely cover the bag-shaped container 92 and be fixed in that position by fixing means (not shown).

Fig. 5 shows another exemplary embodiment of the transport container according to the invention comprising an exemplary embodiment of the bag-shaped container according to the invention. The transport container 110 has a container frame 82 with a horizontal base frame 84 and stanchions 86. Furthermore the transport container 110 comprises the bag-shaped container 112 which is an exemplary embodiment of a bag-shaped container according to the invention. The bag-shaped container 112 has a lower part 114 forming the bottom 116, which has a circular cross section. The bag-shaped container 112 furthermore has a side part 118 forming the side wall 120 of the bag-shaped container 112. The side part has a tubular cross section, but other cross sections are conceivable as well depending on the cross section of the lower part 114. The bag-shaped container 112 furthermore has an upper part 122 forming the top 124 of the bag-shaped container 112.

The side part 118 is provided with connection means in the form of brackets 126 for connecting two opposing faces 127, 128 of the side wall 120 with the stanchions 86 of the container frame 82. The upper part 122 has a tapered shape, especially a funnel or cone shape, wherein a closeable opening 129 is positioned essentially in the center of the tapered shape.

The bag-shaped container 112 is arranged on the container frame 82 lying on the side, i.e. the side part 118 partially bears on the base frame 84.

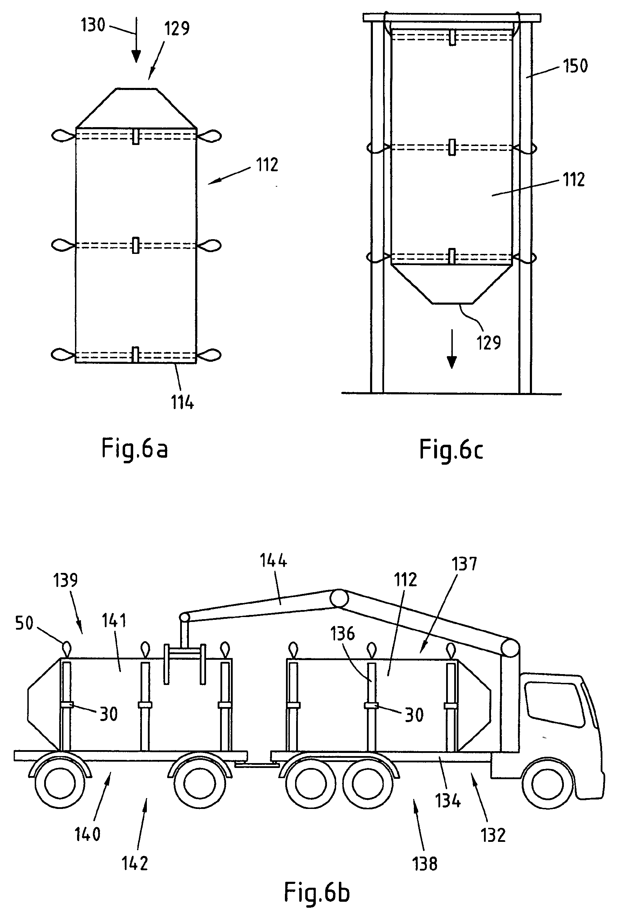

Figs. 6a), 6b) and 6c) show an exemplary embodiment of the method for transporting bulk goods according to the invention. In a first step shown in Fig. 6a), a bag-shaped container according to the invention, which for example can be the bag-shaped container 112 from Fig. 5, is charged with bulk goods through the opening 129 as depicted by the arrow 130. For this purpose, the bag-shaped container 112 is preferably positioned in an upright position so that the opening 129 points essentially upwards.

In a next step the bag-shaped container 112 is then loaded onto a container frame 132 for transporting log wood. The container frame 132 has a horizontal base frame 134 and a plurality of stanchions 136. The bag-shaped container 112 is then connected with the two long sides of the container frame 132 by means of the connection means of the bag-shaped container 112. The container frame 132 and the bag-shaped container 112 together represent an embodiment of the transport container 137 according to the invention.

In Fig. 6b), the transport container 137 is part of a lorry 138. Furthermore a second transport container 139 comprising a container frame 140 and another bag-shaped container 141 is provided, which is part of a trailer 142. Alternatively, two bag-shaped containers can also be loaded on a single transport container. In this case the length of the transport containers is preferably half the length of the container frame.

The bag-shaped container 112 is then stored or transported on the container frame 132. Especially it can be transported to a customer in need for the bulk goods contained in the bag-shaped container 112 or to a disposer. Finally, the bag-shaped container 112 is unloaded again from the container frame 132 and can be discharged.

Lorries with a container frame for transporting log wood are often equipped with a crane 144 which preferably can be used to load and unload the bag-shaped containers 112, 141 employing the lifting means, for example the lifting loops 50. In this way, no further equipment is necessary for loading and unloading the bag-shaped containers 112, 141.

As shown in Fig. 6c), after unloading and before discharging the bag-shaped container 112 can optionally be mounted on a silo frame 150, for example by means of the connection means, the lifting means and/or additionally provided means. The opening 129 then points essentially downwards and is spaced apart from the ground, so that the bag-shaped container can be discharged. In this way the silo frame 150 and the bag-shaped container 112 form a suspended modular silo 152 which is useful for storing and discharging the bulk goods within the bag-shaped container 112 on demand and with controlled discharge flow rate.

## Claims

1. Transport container (80, 110, 137, 139), with a container frame (4, 82, 132, 140) for transporting log wood, wherein the container frame (4, 82, 132, 140) comprises a horizontal base frame (6, 84, 134) having two long sides (8, 10, 88, 90) and two short sides (12, 14), wherein the container frame (4, 82, 132, 140) comprises a plurality of stanchions (16, 86, 136) running angularly to the horizontal base frame (6, 84, 134), wherein the stanchions (16, 86, 136) are spaced apart from each other and are arranged along the long sides (8, 10, 88, 90) of the horizontal base frame (6, 84, 134), wherein at least two of the stanchions (16, 86, 136) are arranged at each one of the long sides (8, 10, 88, 90) and wherein the container frame (4, 82, 132, 140) is part of a vehicle,
**characterized in that** the Transport container (80, 110, 137, 139) further comprises a separate bag-shaped container (20, 60, 92, 112, 141) for bulk goods, especially woodchips and/or sawdust, with a lower part (22, 114) forming the bottom (24, 116) and with at least one side part (26, 118) connected to the lower part (22, 114) forming the side wall (28, 120), wherein the lower part (22, 114) and the side part (26, 118) are designed to keep inside bulk goods, and wherein the side wall (26, 118) forms two opposing faces (32, 34, 127, 128), wherein connection means (30) are provided for releasably connecting each of the two opposing faces (32, 34, 127, 128) of the side wall (28, 120) with at least two stanchions (16, 86, 136) of the container frame (4, 82, 132, 140), wherein the distance between the connection means (30) matches with or is adjustable to match with the distance between the stanchions (16, 86, 136) and wherein the connection means (30) of the bag-shaped container (20, 60, 92, 112, 141) are connectable on each long side with at least two of the stanchions (16, 86, 136), wherein the bag-shaped container (20, 60, 92, 112, 141) is arranged on the container frame (4, 82, 132, 140) lying on the side such that the side part (26, 118) partially bears on the base frame (6, 84, 134), wherein the side part (26, 118) has a tubular cross section and the bottom has a circular cross section, wherein an upper part (44, 66, 96, 122) is provided which is connected to the side part (26, 118) and forms the top (46, 124) of the bag-shaped container (20, 60, 92, 112, 141), wherein the upper part (44, 66, 96, 122) comprises a closable opening (129) for charging and discharging.

2. Transport container according to claim 1,
**characterized in that,** when the bag-shaped container (20, 60, 92, 112, 141) is connected with the container frame (4, 82, 132, 140), in a section (a) between two opposing stanchions (16) the maximum distance (37) of the two opposing faces (32, 34, 127, 128) of the side wall (28, 120) in the completely filled state of the bag-shaped container (20, 60, 92, 112, 141) corresponds to the inside width of the container frame (4, 82, 132, 140) and is optionally at least 1600 mm, and lies preferably between 1600 mm and 3000 mm, more preferably between 2000 mm and 2600 mm.

3. Transport container according to claim 1 or 2,
**characterized in that** anti bulging means, in particular partition walls and/or belts extending between the two opposing faces (32, 34, 127, 128) of the side wall (28, 120), preferably extending parallel to the two short sides (12, 14), are provided.

4. Transport container according to one of claims 1 to 3,
**characterized in that**, when the bag-shaped container (20, 60, 92, 112, 141) is connected with the container frame (4, 82, 132, 140), in a section (b) adjacent to two opposing stanchions (16) the side wall (28, 120) in the completely filled state of the bag-shaped container (20, 60, 92, 112, 141) projects the inner face of the adjacent one of the two opposing stanchions (16) over at most 500 mm, preferably at most 350 mm, more preferably at most 200 mm.

5. Transport container according to one of claims 1 to 4,
**characterized in that** the length of the bag-shaped container (20, 60, 92, 112, 141) corresponds to the length of the horizontal base frame (6, 84, 134) or to 1/n times the length of the horizontal base frame (6, 84, 134), wherein n is an integer.

6. Transport container according to one of claims 1 to 5,
**characterized in that** the transport container (80, 110, 137, 139) is part of a lorry (138), of a trailer (142) or of a rail wagon.

7. Transport container according to one of claims 1 to 6,
**characterized in that** the two opposing faces (32, 34, 127, 128) of the side wall (28, 120) have a maximum distance (37) in the completely filled state of the bag-shaped container (20, 60, 92, 112, 141) of at least 1600 mm, preferably between 1600 mm and 3000 mm, more preferably between 2000 mm and 2600 mm.

8. Transport container according to one of claims 1 to 7,
**characterized in that** a plurality of connection means (30) is provided for each of the two opposing faces (32, 34, 127, 128) of the side wall (28, 120), wherein the connection means (30) for each side wall (28, 120) are preferably spaced apart from each other by a distance in the range of 2000 mm to 4000 mm, preferably 2500 mm to 3500 mm, more preferably 2900 mm to 3100 mm.

9. Transport container according to one of claims 1 to 8,
**characterized in that** the connection means (30) are designed for a positive fit connection with one or more stanchions (16, 86, 136) of a container frame (4, 82, 132, 140) for transporting log wood.

10. Transport container according to one of claims 1 to 9,
**characterized in that** the side part (26, 118) and/or the upper part (44, 66, 96, 122) at least partially have a tapered shape, especially a funnel shape, in the region of the opening (129), wherein the opening (129) is positioned essentially in the center of the tapered shape.

11. Transport container according to one of claims 1 to 10,
**characterized in that** the lower part (22, 114), the side part (26, 118) and/or the upper part (44, 66, 96, 122) are at least partially made from a flexible material, especially foil or textile material like canvas, woven fabric, meshwork, or a combination thereof.

12. Transport container according to one of claims 1 to 11,
**characterized in that** the lower part (22, 114), the side part (26, 118) and/or the upper part (44, 66, 96, 122) comprise reinforcement means, especially strut members, which reinforcement means are preferably arranged in the region of the connection means (30).

13. Transport container according to one of claims 1 to 12,
**characterized in that** means (48) for lifting the bag-shaped container (20, 60, 92, 112, 141) are provided, preferably lifting loops (50).

14. Method for transporting bulk goods, especially woodchips and/or sawdust, in which bulk goods are charged into a bag-shaped container (20, 60, 92, 112, 141) for bulk goods, especially woodchips and/or sawdust, with a lower part (22, 114) forming the bottom (24, 116) wherein the bottom has circular cross section and with as least one side part (26, 118) having a tubular cross section connected to the lower part (22, 114) forming the side wall (28, 120), wherein the lower part (22, 114) and the side part (26, 118) are designed to keep inside bulk goods, wherein the side wall (26, 118) forms two opposing faces (32, 34, 127, 128), and wherein an upper part (44, 66, 96, 122) is provided which is connected to the side part (26, 118) and forms the top (46, 124) of the bag-shaped container (20, 60, 92, 112, 141), wherein the upper part (44, 66, 96, 122) comprises a closable opening (129) for charging and discharging, wherein connection means (30) are provided for releaseably connecting each of the two opposing faces (32, 34, 127, 128) of the side wall (28, 120) with at least two stanchions (16, 86, 136) of a container frame (4, 82, 132, 140) for transporting log wood, wherein the stanchions (16, 86, 136) are running angularly to a horizontal base frame (6, 84, 134) wherein the stanchions are spaced apart from each other and are arranged along the sides of the horizontal base frame, wherein at least two of the stanchions are arranged at each one of the long sides, wherein the distance between the connection means (30) matches with or is adjustable to match with the distance between the stanchions (16, 86, 136), in which the bag-shaped container (20, 60, 92, 112, 141) is loaded onto the container frame (4, 82, 132, 140) for transporting log wood, which is part of a vehicle, wherein the bag-shaped container (20, 60, 92, 112, 141) is arranged on the container frame (4, 82, 132, 140) lying on the side such that the side part (26, 118) partially bears on the base frame (6, 84, 134), in which the bag-shaped container (20, 60, 92, 112, 141) is connected with the two long sides (8, 10, 88, 90) of the container frame (4, 82, 132, 140) by means of the connection means (30) of the bag-shaped container (20, 60, 92, 112, 141) such that the connection means (30) of the bag-shaped container (20, 60, 92, 112, 141) are connected on each long side with at least two of the stanchions, in which the bag-shaped container (20, 60, 92, 112, 141) is stored or transported on the container frame (4, 82, 132, 140), in which the bag-shaped container (20, 60, 92, 112, 141) is unloaded from the container frame (4, 82, 132, 140) and in which the bag-shaped container (20, 60, 92, 112, 141) is discharged.

15. Method according to claim 14,
**characterized in that** after unloading and before discharging, the bag-shaped container (20, 60, 92, 112, 141) is mounted on a silo frame (152) in a way that the opening (129) points essentially downwards, wherein the opening (129) is preferably spaced apart from the ground.

## Patentansprüche

1. Transportbehälter (80, 110, 137, 139) mit einem Behältergestell (4, 82, 132, 140) zum Transportieren von Langholz, wobei das Behältergestell (4, 82, 132, 140) ein horizontales Grundgestell (6, 84, 134) mit zwei langen Seiten (8, 10, 88, 90) und zwei kurzen Seiten (12, 14) umfasst, wobei das Behältergestell (4, 82, 132, 140) mehrere Pfosten (16, 86, 136) umfasst, die in einem Winkel zum horizontalen Grundgestell (6, 84, 134) stehen, wobei die Pfosten (16, 86, 136) voneinander beabstandet sind und entlang der langen Seiten (8, 10, 88, 90) des horizontalen Grundgestells (6, 84, 134) angeordnet sind, wobei mindestens zwei der Pfosten (16, 86, 136) an jeweils einer der langen Seiten (8, 10, 88, 90) angeordnet sind und wobei das Behältergestell (4, 82, 132, 140) Teil eines Fahrzeugs ist, **dadurch gekennzeichnet, dass** der Transportbehälter (80, 110, 137, 139) ferner einen separaten beutelförmigen Behälter (20, 60, 92, 112, 141) für Schüttgut, insbesondere Holzschnitzel und/oder Sägemehl, mit einem unteren Teil (22, 114) umfasst, der den Boden (24, 116) bildet, und mit mindestens einem Seitenteil (26, 118), das mit dem unteren Teil (22, 114) verbunden ist und die Seitenwand (28, 120) bildet, wobei der untere Teil (22, 114) und das Seitenteil (26, 118) dafür gestaltet sind, Schüttgut im Inneren zu halten, und wobei die Seitenwand (26, 118) zwei gegenüberliegende Seiten (32, 34, 127, 128) bildet, wobei Verbindungsmittel (30) bereitgestellt sind, um jede der zwei gegenüberliegenden Seiten (32, 34, 127, 128) der Seitenwand (28, 120) mit mindestens zwei Pfosten (16, 86, 136) des Behältergestells (4, 82, 132, 140) lösbar zu verbinden, wobei der Abstand zwischen den Verbindungsmitteln (30) mit dem Abstand zwischen den Pfosten (16, 86, 136) übereinstimmt oder derart einstellbar ist, dass er damit übereinstimmt, und wobei die Verbindungsmittel (30) des beutelförmigen Behälters (20, 60, 92, 112, 141) an jeder langen Seite mit mindestens zwei der Pfosten (16, 86, 136) verbunden werden können, wobei der beutelförmige Behälter (20, 60, 92, 112, 141) auf dem Behältergestell (4, 82, 132, 140) derart auf der Seite liegend angeordnet ist, dass das Seitenteil (26, 118) teilweise auf dem Grundgestell (6, 84, 134) ruht, wobei das Seitenteil (26, 118) einen röhrenförmigen Querschnitt und der Boden einen kreisförmigen Querschnitt aufweist, wobei ein oberes Teil (44, 66, 96, 122) bereitgestellt ist, das mit dem Seitenteil (26, 118) verbunden ist und die Oberseite (46, 124) des beutelförmigen Behälters (20, 60, 92, 112, 141) bildet, wobei das obere Teil (44, 66, 96, 122) eine verschließbare Öffnung (129) für das Befüllen und Entleeren umfasst.

2. Transportbehälter nach Anspruch 1, **dadurch gekennzeichnet, dass** in einem Abschnitt (a) zwischen zwei gegenüberliegenden Pfosten (16) der maximale Abstand (37) der zwei gegenüberliegenden Seiten (32, 34, 127, 128) der Seitenwand (28, 120) im vollständig gefüllten Zustand des beutelförmigen Behälters (20, 60, 92, 112, 141) der Innenweite des Behältergestells (4, 82, 132, 140) entspricht und optional mindestens 1600 mm beträgt und vorzugsweise zwischen 1600 und 3000 mm liegt, bevorzugter zwischen 2000 und 2600 mm, wenn der beutelförmige Behälter (20, 60, 92, 112, 141) mit dem Behältergestell (4, 82, 132, 140) verbunden ist.

3. Transportbehälter nach Anspruch 1 oder 2, **dadurch gekennzeichnet, dass** Ausbauchungsverhinderungsmittel, insbesondere Trennwände und/oder Gurte, die sich zwischen den zwei gegenüberliegenden Seiten (32, 34, 127, 128) der Seitenwand (28, 120) erstrecken, vorzugsweise parallel zu den zwei kurzen Seiten (12, 14), bereitgestellt sind.

4. Transportbehälter nach einem der Ansprüche 1 bis 3, **dadurch gekennzeichnet, dass** in einem Abschnitt (b), der an zwei gegenüberliegende Pfosten (16) angrenzt, die Seitenwand (28, 120) im vollständig gefüllten Zustand des beutelförmigen Behälters (20, 60, 92, 112, 141) die Innenseite des angrenzenden der zwei gegenüberliegenden Pfosten (16) um höchstens 500 mm überragt, vorzugsweise höchstens 350 mm, bevorzugter höchstens 200 mm, wenn der beutelförmige Behälter (20, 60, 92, 112, 141) mit dem Behältergestell (4, 82, 132, 140) verbunden ist.

5. Transportbehälter nach einem der Ansprüche 1 bis 4, **dadurch gekennzeichnet, dass** die Länge des beutelförmigen Behälters (20, 60, 92, 112, 141) der Länge des horizontalen Grundgestells (6, 84, 134) oder 1/n mal der Länge des horizontalen Grundgestells (6, 84, 134) entspricht, wobei n eine Ganzzahl ist.

6. Transportbehälter nach einem der Ansprüche 1 bis 5, **dadurch gekennzeichnet, dass** der Transportbehälter (80, 110, 137, 139) Teil eines Lastkraftwagens (138), eines Anhängers (142) oder eines Eisenbahnwaggons ist.

7. Transportbehälter nach einem der Ansprüche 1 bis 6, **dadurch gekennzeichnet, dass** die zwei gegenüberliegenden Seiten (32, 34, 127, 128) der Seitenwand (28, 120) im vollständig gefüllten Zustand des beutelförmigen Behälters (20, 60, 92, 112, 141) einen maximalen Abstand (37) von mindestens 1600 mm aufweisen, vorzugsweise zwischen 1600 und 3000 mm, bevorzugter zwischen 2000 und 2600 mm.

8. Transportbehälter nach einem der Ansprüche 1 bis 7, **dadurch gekennzeichnet, dass** für jede der zwei gegenüberliegenden Seiten (32, 34, 127, 128) der Seitenwand (28, 120) mehrere Verbindungsmittel (30) bereitgestellt sind, wobei die Verbindungsmittel (30) für jede Seitenwand (28, 120) vorzugsweise in einem Abstand im Bereich von 2000 bis 4000 mm, vorzugsweise 2500 bis 3500 mm, bevorzugter 2900 bis 3100 mm, voneinander beabstandet sind.

9. Transportbehälter nach einem der Ansprüche 1 bis 8, **dadurch gekennzeichnet, dass** die Verbindungsmittel (30) zum Zweck des Langholztransports für eine formschlüssige Verbindung mit einem oder mehreren Pfosten (16, 86, 136) eines Behältergestells (4, 82, 132, 140) gestaltet sind.

10. Transportbehälter nach einem der Ansprüche 1 bis 9, **dadurch gekennzeichnet, dass** das Seitenteil (26, 118) und/oder das obere Teil (44, 66, 96, 122) im Bereich der Öffnung (129) zumindest teilweise eine sich verjüngende Form aufweisen, insbesondere eine Trichterform, wobei die Öffnung (129) im Wesentlichen in der Mitte der sich verjüngenden Form positioniert ist.

11. Transportbehälter nach einem der Ansprüche 1 bis 10, **dadurch gekennzeichnet, dass** das untere Teil (22, 114), das Seitenteil (26, 118) und/oder das obere Teil (44, 66, 96, 122) zumindest teilweise aus einem flexiblen Material bestehen, insbesondere Folien- oder Textilmaterial, wie etwa Planen, Gewebe, Maschenware oder eine Kombination daraus.

12. Transportbehälter nach einem der Ansprüche 1 bis 11, **dadurch gekennzeichnet, dass** das untere Teil (22, 114), das Seitenteil (26, 118) und/oder das obere Teil (44, 66, 96, 122) Verstärkungsmittel umfassen, insbesondere Verstrebungselemente, wobei die Verstärkungsmittel vorzugsweise im Bereich der Verbindungsmittel (30) angeordnet sind.

13. Transportbehälter nach einem der Ansprüche 1 bis 12, **dadurch gekennzeichnet, dass** Mittel (48) zum Heben des beutelförmigen Behälters (20, 60, 92, 112, 141) bereitgestellt sind, vorzugsweise Hebeschlaufen (50).

14. Verfahren zum Transport von Schüttgut, insbesondere Holzschnitzel und/oder Sägemehl, wobei Schüttgut in einen beutelförmigen Behälter (20, 60, 92, 112, 141) für Schüttgut, insbesondere Holzschnitzel und/oder Sägemehl, geladen wird, der ein unteres Teil (22, 114) aufweist, das den Boden (24, 116) bildet, wobei der Boden einen kreisförmigen Querschnitt aufweist, und mindestens ein Seitenteil (26, 118), das einen röhrenförmigen Querschnitt aufweist und mit dem unteren Teil (22, 114) verbunden ist und die Seitenwand (28, 120) bildet, wobei das untere Teil (22, 114) und das Seitenteil (26, 118) dafür gestaltet sind, Schüttgut im Inneren zu halten, wobei die Seitenwand (26, 118) zwei gegenüberliegende Seiten (32, 34, 127, 128) bildet und wobei ein oberes Teil (44, 66, 96, 122) bereitgestellt ist, das mit dem Seitenteil (26, 118) verbunden ist und die Oberseite (46, 124) des beutelförmigen Behälters (20, 60, 92, 112, 141) bildet, wobei das obere Teil (44, 66, 96, 122) eine verschließbare Öffnung (129) für das Befüllen und Entleeren umfasst, wobei Verbindungsmittel (30) bereitgestellt sind, um jede der zwei gegenüberliegenden Seiten (32, 34, 127, 128) der Seitenwand (28, 120) für den Langholztransport mit mindestens zwei Pfosten (16, 86, 136) eines Behältergestells (4, 82, 132, 140) lösbar zu verbinden, wobei die Pfosten (16, 86, 136) in einem Winkel zum horizontalen Grundgestell (6, 84, 134) stehen, wobei die Pfosten voneinander beabstandet sind und entlang der Seiten des horizontalen Grundgestells angeordnet sind, wobei mindestens zwei der Pfosten an jeweils einer der langen Seiten angeordnet sind, wobei der Abstand zwischen den Verbindungsmitteln (30) mit dem Abstand zwischen den Pfosten (16, 86, 136) übereinstimmt oder so einstellbar ist, dass er damit übereinstimmt, wobei der beutelförmige Behälter (20, 60, 92, 112, 141) zum Transport von Langholz auf das Behältergestell (4, 82, 132, 140) geladen wird, das Teil eines Fahrzeugs ist, wobei der beutelförmige Behälter (20, 60, 92, 112, 141) auf dem Behältergestell (4, 82, 132, 140) derart auf der Seite liegend angeordnet wird, dass das Seitenteil (26, 118) teilweise auf dem Grundgestell (6, 84, 134) ruht, wobei der beutelförmige Behälter (20, 60, 92, 112, 141) mittels der Verbindungsmittel (30) des beutelförmigen Behälters (20, 60, 92, 112, 141) derart mit den zwei langen Seiten (8, 10, 88, 90) des Behältergestells (4, 82, 132, 140) verbunden wird, dass die Verbindungsmittel (30) des beutelförmigen Behälters (20, 60, 92, 112, 141) an jeder langen Seite mit mindestens zwei der Pfosten verbunden sind, wobei der beutelförmige Behälter (20, 60, 92, 112, 141) auf dem Behältergestell (4, 82, 132, 140) gelagert oder transportiert wird, wobei der beutelförmige Behälter (20, 60, 92, 112, 141) vom Behältergestell (4, 82, 132, 140) abgeladen wird und wobei der beutelförmige Behälter (20, 60, 92, 112, 141) entleert wird.

15. Verfahren nach Anspruch 14, **dadurch gekennzeichnet, dass** der beutelförmige Behälter (20, 60, 92, 112, 141) nach dem Abladen und vor den Entleeren an ein Silogestell (152) montiert wird, und zwar so, dass die Öffnung (129) im Wesentlichen nach unten weist, wobei die Öffnung (129) vorzugsweise vom Boden beabstandet ist.

## Revendications

1. Contenant de transport (80, 110, 137, 139), comportant un châssis de contenant (4, 82, 132, 140) pour le transport de billes de bois, dans lequel le châssis de contenant (4, 82, 132, 140) comprend un corps horizontal de base (6, 84, 134) doté de deux côtés longs (8, 10, 88, 90) et deux côtés courts (12, 14), le châssis de contenant (4, 82, 132, 140) comprenant une pluralité de ranchers (16, 86, 136) rejoignant en angle le châssis horizontal de base (6, 84, 134), les ranchers (16, 86, 136) étant espacés les uns des autres et étant disposés sur les côtés longs (8, 10, 88, 90) du châssis horizontal de base (6, 84, 134), au moins deux des ranchers (16, 86, 136) étant disposés sur chacun des côtés longs (8, 10, 88, 90) et le châssis de contenant (4, 82, 132, 140) faisant partie d'un véhicule, **caractérisé en ce que** le contenant de transport (80, 110, 137, 139) comprend en outre un contenant en forme de poche séparé (20, 60, 92, 112, 141) pour les marchandises en vrac, en particulier les copeaux de bois et/ou la sciure, comportant une partie inférieure (22, 114) formant le fond (24, 116) et dont au moins une partie latérale (26, 118) est connectée à la partie inférieure (22, 114) formant la paroi latérale (28, 120), la partie inférieure (22, 114) et la partie latérale (26, 118) étant conçues pour retenir des marchandises en vrac à l'intérieur et la partie latérale (26, 118) formant deux faces opposées (32, 34, 127, 128), des moyens de connexion (30) étant prévus pour connecter de manière dissociable chacune des deux faces opposées (32, 34, 127, 128) de la paroi latérale (28, 120) à au moins deux ranchers (16, 86, 136) du châssis de contenant (4, 82, 132, 140), la distance entre les moyens de connexion (30) coïncidant avec ou étant réglable pour coïncider avec la distance entre les ranchers (16, 86, 136) et les moyens de connexion (30) du contenant en forme de poche (20, 60, 92, 112, 141) pouvant être connectés sur chaque côté long à au moins deux des ranchers (16, 86, 136), le contenant en forme de poche (20, 60, 92, 112, 141) étant disposé sur le châssis de contenant (4, 82, 132, 140) reposant sur le côté de manière à ce que la partie latérale (26, 118) porte partiellement sur le châssis de base (6, 84, 134), la partie latérale {26, 118) ayant une section transversale tubulaire et le fond ayant une section transversale circulaire, étant prévue une partie supérieure (44, 66, 96, 122) qui est connectée à la partie latérale (26, 118} et qui forme le dessus (46, 124) du contenant en forme de poche (20, 60, 92, 112, 141), la partie supérieure (44, 66, 96, 122) comprenant une ouverture refermable (129) pour charger et décharger.

2. Contenant de transport selon la revendication 1, **caractérisé en ce que**, lorsque le contenant en forme de poche (20, 60, 92, 112, 141) est connecté au châssis de contenant (4, 82, 132, 140), dans une section (a) entre deux ranchers opposés (16), la distance maximale (37) entre les deux faces opposées (32, 34, 127, 128) de la paroi latérale (28, 120), en état complètement rempli du contenant en forme de poche (20, 60, 92, 112, 141), correspond à la largeur intérieure du châssis de contenant (4, 82, 132, 140) et mesure en option au moins 1600 mm et se situe de préférence entre 1600 mm et 3000 mm, plus préférentiellement entre 2000 mm et 2600 mm.

3. Contenant de transport selon la revendication 1 ou 2, **caractérisé en ce que** des moyens anti-gauchissement, en particulier des cloisons de séparation et/ou des courroies s'étendant entre les deux faces opposées (32, 34, 127, 128) de la paroi latérale (28, 120) et s'étendant de préférence parallèlement aux deux côtés courts (12, 14), sont prévues.

4. Contenant de transport selon l'une quelconque des revendications 1 à 3, **caractérisé en ce que**, lorsque le contenant en forme de poche (20, 60, 92, 112, 141) est connecté au châssis de contenant (4, 82, 132, 140), dans une section (b) adjacente à deux ranchers opposés (16), la paroi latérale (28, 120), en état complètement rempli du contenant en forme de poche (20, 60, 92, 112, 141) projette la face interne du rancher adjacent parmi les deux ranchers opposés (16) sur au plus 500 mm, de préférence au plus 350 mm, plus préférentiellement au plus 200 mm.

5. Contenant de transport selon l'une quelconque des revendications 1 à 4, **caractérisé en ce que** la longueur du contenant en forme de poche (20, 60, 92, 112, 141) équivaut à la longueur du châssis horizontal de base (6, 84, 134) ou à 1/n fois la longueur du châssis horizontal de base (6, 84, 134), n étant un nombre entier.

6. Contenant de transport selon l'une quelconque des revendications 1 à 5, **caractérisé en ce que** le contenant de transport (80, 110, 137, 139) fait partie d'un camion (138), d'un semi-remorque (142) ou d'un wagon ferroviaire.

7. Contenant de transport selon l'une quelconque des revendications 1 à 6, **caractérisé en ce que** les deux faces opposées (32, 34, 127, 128) de la paroi latérale (28, 120) sont à une distance maximale (37), dans l'état complètement rempli du contenant en forme de poche (20, 60, 92, 112, 141), d'au moins 1600 mm, de préférence de 1600 mm à 3000 mm, plus préférentiellement de 2000 mm à 2600 mm.

8. Contenant de transport selon l'une quelconque des revendications 1 à 7, **caractérisé en ce qu'**une pluralité de moyens de connexion (30) est prévue pour chacune des deux faces opposées (32, 34, 127, 128) de la paroi latérale (28, 120), les moyens de connexion (30) de chaque paroi latérale (28, 120) étant de préférence espacés les uns des autres d'une distance de l'ordre de 2000 mm à 4000 mm, de préférence 2500 mm à 3500 mm, plus préférentiellement 2900 mm à 3100 mm.

9. Contenant de transport selon l'une quelconque des revendications 1 à 8, **caractérisé en ce que** les moyens de connexion (30) sont conçus pour une connexion à ajustement positif avec un ou plusieurs ranchers (16, 86, 136) d'un châssis de contenant (4, 82, 132, 140) destiné au transport de billes de bois.

10. Contenant de transport selon l'une quelconque des revendications 1 à 9, **caractérisé en ce que** la partie latérale (26, 118) et/ou la partie supérieure (44, 66, 96, 122) ont au moins partiellement une forme conique, en particulier une forme d'entonnoir, dans la zone de l'ouverture (129), l'ouverture (129) étant positionnée sensiblement au centre de la forme conique.

11. Contenant de transport selon l'une quelconque des revendications 1 à 10, **caractérisé en ce que** la partie inférieure (22, 114), la partie latérale (26, 118) et/ou la partie supérieure (44, 66, 96, 122) sont au moins partiellement composées d'un matériau souple, en particulier un film de matériau ou du textile comme de la toile, un tissage, de la maille ou leurs combinaisons.

12. Contenant de transport selon l'une quelconque des revendications 1 à 11, **caractérisé en ce que** la partie inférieure (22, 114), la partie latérale (26, 118) et/ou la partie supérieure (44, 66, 96, 122) comprennent des moyens de renfort, en particulier des éléments à croisillons, lesquels moyens de renfort sont de préférence disposés dans la zone des moyens de connexion (30).

13. Contenant de transport selon l'une quelconque des revendications 1 à 12, **caractérisé en ce que** des moyens (48) de levage du contenant en forme de poche (20, 60, 92, 112, 141) sont prévus, de préférence des boucles de levage (50).

14. Procédé de transport de marchandise en vrac, en particulier de copeaux de bois et/ou de sciure, dans lequel des marchandises en vrac sont chargées sur un contenant en forme de poche (20, 60, 92, 112, 141) pour marchandises en vrac, en particulier des copeaux de bois et/ou de la sciure, comportant une partie inférieure (22, 114) formant le fond (24, 116), le fond ayant une section transversale circulaire, et au moins une partie latérale (26, 118) ayant une section transversale circulaire connectée à la partie inférieure (22, 114) formant la paroi latérale (28, 120), la partie inférieure (22,114) et la partie latérale (26,118) étant conçues pour retenir des marchandises de vrac à l'intérieur et la partie inférieure formant deux faces opposées (32, 34, 127, 128), et étant prévue une partie supérieure (44, 66, 96, 122) qui est connectée à la partie latérale (26, 118) et forme le dessus (46, 124) du contenant en forme de poche (20, 60, 92, 112, 141), la partie supérieure (44, 66, 96, 122) comprenant une ouverture refermable (129) pour charger et décharger, des moyens de connexion (30) étant prévus pour connecter de manière dissociable chacune des deux faces opposées (32, 34, 127, 128) de la paroi latérale (28, 120) à au moins deux ranchers (16, 86, 136) d'un châssis de contenant (4, 82, 132, 140) pour le transport de billes de bois, les ranchers (16, 86, 136) rejoignant en angle un châssis horizontal de base (6, 84, 134), les ranchers étant espacés les uns des autres et étant disposés sur les côtés du cadre horizontal de base, au moins deux des ranchers étant disposés sur chacun des cotés longs, la distance entre les moyens de connexion (30) coïncidant avec ou étant réglable pour coïncider avec la distance entre les ranchers (16, 86, 136), le contenant en forme de poche (20, 60, 92, 112, 141) étant chargé sur le châssis de contenant (4, 82, 132, 140) servant à transporter les billes de bois qui fait partie d'un véhicule, le contenant en forme de poche (20, 60, 92, 112, 140) étant disposé sur le châssis de contenant (4, 82, 132, 140) reposant sur le côté de manière à ce que la partie latérale (26, 118) porte partiellement sur le châssis de base (6, 84, 134), dans lequel le contenant en forme de poche (20, 60, 92, 112, 141) est connecté aux deux côtés longs (8, 10, 88, 90) du châssis de contenant (4, 82, 132, 140) à l'aide des moyens de connexion (30) du contenant en forme de poche (20, 60, 92, 112, 141) de manière à ce que les moyens de connexion (30) du contenant en forme de poche (20, 60, 92, 112, 141) soient connectés sur chaque côté long à au moins deux des ranchers, dans lequel le contenant en forme de poche (20, 60, 92, 112, 141) est stocké ou transporté sur le châssis de contenant (4, 82, 132, 140), dans lequel le contenant en forme de poche (20, 60, 92, 112, 141) est déchargé du châssis de contenant (4, 82, 132, 140) et dans lequel le contenant en forme de poche (20, 60, 92, 112, 141) est vidé.

15. Procédé selon la revendication 14, **caractérisé en ce que**, après le déchargement et avant le vidage, le contenant en forme de poche (20, 60, 92, 112, 141) est monté sur un châssis de silo (152) de manière à ce que l'ouverture (129) pointe sensiblement vers le bas, l'ouverture (129) étant de préférence espacée du sol.
